# EUROPEAN PATENT APPLICATION

(11) **EP 4 286 580 A2**
(43) Date of publication of application: **06.12.2023**
(21) Application number: 23190558.9
(22) Date of filing: 14.07.2022
(51) Int. Cl.: D06N 7/00

(54) **ARTIFICIAL TURF COMPRISING ANTIMICROBIAL POLYURETHANE BACKING**

(30) Priority: 25.05.2022 US 202263345549 P
(62) Divisional of application: 22184947.4
(71) Applicant: Synthetic Turf Resources, Dalton, GA 30721 (US)
(72) Inventor: SICK, Stephan, 76532 Baden-Baden (DE); MOBLEY, Larry Wayne, Canton, 30114 (US); CLOER, Jerry Chase, Chatsworth, 30705 (US)
(74) Representative: Richardt Patentanwälte PartG mbB

(57) **Abstract**

The invention relates to a method of manufacturing an artificial turf (600) and the artificial turf obtained by this method, the method comprising:
incorporating an artificial turf fiber on a carrier (104);
adding a polyurethane reaction mixture on the back side of the carrier (106);
and
hardening polyurethane reaction mixture to form a polyurethane backing,
characterized in that pyrithione zinc is added in the polyurethane reaction mixture to provide antimicrobial property to the polyurethane backing.

## Description

### Field of the invention

The invention relates generally to an artificial turf and, more particularly, to an artificial turf with a polyurethane antimicrobial backing and a method of producing the artificial turf.

### Background and related art

Use of artificial turf is increasing because it is easier to maintain than natural turf and its surface characteristics are in many respects better than those of natural turf. Typically, artificial turf is manufactured by extruding a thermoplastic resin to produce artificial turf fiber which is inserted on a carrier via a process known as tufting. The polymer fibers on the surface of the artificial turf are in the form of loops often referred to as piles. Often, a polymer resin is applied on the back side of the carrier for enhancing the structural stability and the pile pulling characteristics of the artificial turf. Artificial turf is used in many applications including household floor matting, playing surface for sports such as soccer, football, rugby, tennis, golf, exercise fields, landscaping applications and the like.

A major problem with existing artificial turfs is that they are prone to microbial contamination which may also reduce their usable life. Some efforts in addressing this problem have been reported in the patent literature. For example, Korean published document KR101942846B1 discloses a method for manufacturing an artificial turf structure including a backing layer, a foam layer, a turf pile layer and an infill placed between the turf piles. The turf piles are made of recyclable polyethylene material. KR101942846B1 describes the use of an antibacterial agent in the composition of the turf piles. According to KR101942846B1 the antibacterial agent can be one in which zinc is supported on an inorganic carrier.

Korean published patent document KR101887103B1 describes a method for producing an artificial grass structure, which includes a back coating layer, and a foam layer (also referred to as the turf cell layer) with the turf piles formed on the back coating layer. An infill material is added between the turf piles. The back coating layer is said to be made of a thermosetting polyurethane, thermoplastic polyurethane, ethyl vinyl acetate copolymer, or a hydroxy latex. The composition is said to include an antibacterial agent without specifying whether this composition refers to the composition for the turf layer, the fibers, the back coating, or the infill that is added between the fibers on top of the turf fiber layer. The antibacterial agent is said to be a zinc-based antibacterial agent or an organic antibacterial agent.

Korean published patent document KR101887105B1 describes an artificial turf structure which includes a primer layer formed on the construction site, a back coating layer formed on the primer layer, and a top layer with the fibers formed on the back coating layer. The top layer is added on the back coating layer while the back coating layer is still at a temperature of at least 50°C for ensuring that the back coating layer, the top layer and the lower part of the fibers are integrated in situ to form a laminated structure. KR101887105B1 describes the use of an antimicrobial agent added in the back coating layer. The antibacterial agent is said to be a zinc-based agent or an organic antibacterial agent. In CN111607833A zinc pyrithione is added as antibacterial agent in the turf fibers which are made of polyethylene.

Despite the above rather limited suggestions for use of antimicrobial agents in artificial turf structures, no practical solution exists, especially for artificial turf structures with a polyurethane thermoset backing.

### Summary of the Present Invention

Accordingly, it is an object of the present invention to provide an artificial turf which comprises a thermoset polyurethane backing with improved antimicrobial property without sacrificing the structural stability, and pulling pile strength offered by the polyurethane backing. It is also an object of the present invention to provide a method for manufacturing the artificial turf.

According to the present invention, an artificial turf with polyurethane antimicrobial backing and a method for manufacturing the artificial turf are provided which overcome the issues of the existing state of the art.

The invention provides the artificial turf with the polyurethane antimicrobial backing and also the method of manufacturing the artificial turf in the independent claims. Embodiments are given in the dependent claims. Embodiments can freely be combined with each other if they are not mutually exclusive.

According to a first aspect of the present invention, a method for manufacturing an artificial turf comprises incorporating artificial turf fiber into a carrier, and adding a viscous polyurethane reaction mixture onto a back side of the carrier to form a polyurethane backing, wherein the method is characterized in that a biocide agent is added in the polyurethane reaction mixture.

Preferably, the biocide agent is a metal coordination complex with pyrithione, or a zinc-based antimicrobial agent. Examples of suitable metal coordination complexes with pyrithione that can serve as antimicrobial agents include zinc pyrithione, manganese pyrithione, copper pyrithione, and sodium pyrithione. Examples of suitable zinc-based antimicrobial agents other than zinc pyrithione include zinc oxide nanoparticles and a zinc-glucose-citrate complex. Particularly preferred is pyrithione zinc (also often referred to commonly as zinc pyrithione).

The pyrithione zinc is used as the antimicrobial agent in an amount of 0.05 wt% to 1.5 wt%, of the polyurethane reaction mixture, and, preferably, in an amount of 0.08 wt% to 0.7 wt % of the polyurethane reaction mixture. More preferably, the zinc pyrithione is used as the antimicrobial agent in an amount of 0.1 wt% to 0.5 wt% of the polyurethane reaction mixture.

The pyrithione zinc disperses well in the polyurethane reaction mixture. The pyrithione zinc has strong antimicrobial, fungistatic, and antibacterial property. However, it has been unexpectedly found that the pyrithione zinc also has an effect in slowing down the polymerization reaction rate of the polyurethane reaction mixture. This is a rather surprising effect which has been found to be beneficial for allowing deeper penetration of the polyurethane reaction mixture in the carrier material of the artificial turf before the polyurethane reaction mixture is fully solidified. It has also been found that a more homogeneous coverage of the polyurethane backing is obtained around the fibers protruding at the back side of the turf which is substantially free of any voids or bubbles. Thus, the use of the PZ not only provides an effective antimicrobial characteristic to the artificial turf but it also has a synergistic effect in improving the penetration and coverage of the polyurethane backing. On the other hand, an excessive amount of the pyrithione zinc will slow down the reaction too much and result in loss of the aforementioned benefits. Thus, adding of the pyrithione zinc in the polyurethane reaction mixture requires controlling of the polymerization reaction to prevent excessive retardation of the polyurethane reaction mixture.

Preferably, a chelating agent is added in the polyurethane reaction mixture for counteracting the reaction retardation effect of the pyrithione zinc and allow better control of the reaction rate. Through extensive research, it has been found that the addition of certain chelating agents results in maintaining a better control of the polymerization reaction of the polyurethane reaction mixture by moderating the slowing effect of the pyrithione zinc.

Preferably, the method further includes adding in the polyurethane reaction mixture a chelating agent that can bond or interact with the zinc metal ions of the pyrithione zinc and can counteract the reaction retardation effect of the pyrithione zinc. The chelating agent is added in an effective amount for sufficiently adjusting the polymerization reaction of the polyurethane reaction mixture to a desired level to ensure the formation of an improved more homogeneous polyurethane backing with effective antimicrobial characteristic. The specific amount of the chelating agent depends on the amount of the pyrithione zinc used, and the desired time for completing the solidification of the polyurethane reaction mixture into a solid mass. Adding of the chelate agent is advantageous because it allows better control of the solidification rate of the polyurethane reaction mixture. Improved control of the solidification reaction allows more uniform application of the polyurethane reaction mixture over the back side of the carrier in a homogeneous manner without voids or gaps, thus allowing the formation of a stronger coupling between the polyurethane backing and the carrier and also between the polyurethane backing and the turf fiber. The voids and gaps may also become areas where microbes and bacteria can grow, and therefore, eliminating such voids and gaps further enhances the antimicrobial property of the artificial turf.

Although the precise mechanism of the interaction of the pyrithione zinc and of the chelating effects in the polymerization reaction is not well understood, the overall effect of the use of the pyrithione zinc in combination with the chelating agent is that the solidification reaction of the polyurethane reaction mixture proceeds at a rate similar to the polyurethane reaction without the inclusion of pyrithione zinc, and results in the formation of a solid polyurethane backing on the carrier of the artificial turf which is substantially free of voids or bubbles.

Suitable chelating agents for the polyurethane/pyrithione zinc mixture which have been found to be effective to maintain the solidification reaction of the polyurethane reaction mixture include:
- polymeric carboxylic acids,
- phosphonates, e.g. 2-Phosphonobutane-1,2,4,-tricarboxylic Acid (PBTC) or amino phosphonates,
- alcohol amines (also referred to as alkanolamines) such as isopropanol amines and aliphatic amine-initiated polyether polyols, with the aliphatic amine-initiated polyether polyols being preferred; and
- salts thereof.

In particular, the salts of the aforementioned substance groups can be sodium and potassium salts.

Examples of suitable chelating agents for the polyurethane/pyrithione zinc mixture which have been found to be effective to maintain the solidification reaction of the polyurethane reaction mixture include EDTA (ethylenediaminetetraacetic acid), nitrilotriacetic acid (NTA), aminotrismethylene phosphonic acid (ATMP), hydroxyethylidene diphosphonic acid (HEDP), and DETAPMP (Diethylene Triamine Pentamethylene Phosphonic acid). Examples of preferred chelating agents include (1 ,2-diaminoethane)-initiated polyether polyol, (2-aminoethyl ethanolamine)-initiated polyol, or (N,N-Bis(3-aminopropyl)methylamine)-initiated polyol, (N-(2-aminoethyl)ethanolamine)-initiated polyether polyol, wherein preferably these polyols are propoxylated or ethoxylated or more preferably the polyols are both propoxylated and ethoxylated.

Examples of suitable commercially available chelating agents are VORANOL VORACTIV DNC 779.01 polyol- a catalytically active high functionality polyether polyol, VORANOL 800 polyol- an aliphatic-amine initiated polyol with hydroxyl number 800 mg KOH/g), N,N,N',N'-tetrakis (2-hydroxypropyl) ethylenediamine (quadrol), or LUPRANOI 1002/1 polyol -an alkoxylate with primary hydroxyl end groups.

The chelating agent is added in an amount sufficient to chelate the pyrithione zinc chemically available to influence the polymerization of the polyurethane formulation, the amount varying proportionally to the molecular weight of the amine-initiated polyol. Generally, a lower level of low molecular weight chelating polyol is required than the level for a high molecular weight chelating polyol. On a molar basis, the chelating amine-initiated polyol should be added in an amount from 10% to 100% of the total moles of pyrithione zinc in the formulation, preferably from 20% to 90%, more preferably from 30% to 80%, and most preferably 40% to 70% of the moles of pyrithione zinc in the polyurethane reaction mixture. The chelating agent is added in an amount of from 0.01 wt% to 10 wt%, e.g. 0.01 to 0.3 wt% of the polyurethane reaction mixture, preferably in an amount of from 0.1 to 1 wt% of the polyurethane reaction mixture, and a ratio of the mass of the biocide agent over the chelating agent is from 0.05 to 2. According to preferred embodiments, the chelating agent is added in a molar ratio such that the molar ratio of biocide agent over the chelating agent is from 0.5 to 2. This may be beneficial as this molar ratio may ensure that a sufficient molar amount of the chelating agent is present to compensate for the effect of the biocide agent on the reaction speed.

The turf fiber includes polymer fiber made of any suitable polymer, however, preferably the turf fiber includes hydrophobic polyethylene fiber selected from the group consisting of polyethylene homopolymer fiber, polyethylene alloy fiber, polyethylene copolymer fiber, and polyethylene impact copolymer fiber.

Incorporating the turf fiber into the carrier includes positioning the fiber so that a first portion of the fiber is located at the back side of the carrier (also referred to hereinafter as the back portion of the fiber), a second portion of the fiber is protruding to the front side of the carrier (also referred to hereinafter as the front portion of the fiber) and a third portion of the fiber is inside the carrier (referred to also as the middle portion of the fiber or the carrier portion of the fiber).

In some embodiments, the polyurethane reaction mixture includes at least one polyol, at least one isocyanate, a curing agent, and the pyrithione zinc. Preferably the polyurethane reaction mixture includes at least one polyol, at least one isocyanate, a curing agent, the pyrithione zinc and a chelating agent. Preferably, the pyrithione zinc and also, (when used) the chelating agent are mixed in a separate container than the polyol and the isocyanate and are added in the reaction mixture and mixed just before the application of the polyurethane reaction mixture over the back side of the carrier of the artificial turf.

In some embodiments, the polyurethane is the reaction product of first and second polyols with an isocyanate, wherein the first polyol is polyether polyol and/or polyester polyol having at least 2 hydroxyl groups per molecule, wherein the second polyol is polybutadiene diol, wherein the isocyanate comprises isocyanate monomers, isocyanate polymers or isocyanate prepolymers or a mixture thereof, and wherein the isocyanate monomers, the isocyanate polymers and the isocyanate prepolymers have two or more isocyanate groups per molecule.

These and other features and advantages of the present invention will become better understood by those skilled in this art from the following figures and detailed description of specific embodiments of the invention.

### Brief Description of the Drawings

Figure 1A illustrates a flowchart of a method of manufacturing of an artificial turf with an antimicrobial polyurethane backing, according to some embodiments of the present invention.
Figure 1B illustrates a flowchart of a method of manufacturing of an artificial turf with an antimicrobial polyurethane backing, according to another embodiment of the present invention.
Figure 2 illustrates a simplified block diagram of a process for forming a polyurethane reaction mixture for the backing of the artificial turf, according to some embodiments of the present invention.
Figure 3 illustrates a "knife over roll" polyurethane backing process, according to some embodiments of the present invention.
Figure 4 illustrates the extrusion of the polymer mixture into a monofilament, according to some embodiments of the present invention.
Figures 5a and 5b illustrate the tufting of an artificial turf fiber and illustrates first and second parts of the fiber, according to some embodiments of the present invention.
Figure 6a and 6b illustrate portions of monofilaments and fibers embedded in the polyurethane backing, according to some embodiments of the present invention.

### Detailed Description of the Invention

Various embodiments of the present invention will be described in greater detail with reference to the accompanying drawings.

The present invention provides a method for manufacturing an artificial turf comprising incorporating artificial turf fiber into a carrier, and adding a viscous polyurethane reaction mixture onto a back side of the carrier to form a polyurethane backing, wherein the method is characterized in that an effective amount of a biocide agent is added in the polyurethane reaction mixture. The biocide agent has antimicrobial, antibacterial and antifungal properties. The biocide agent is added and dispersed via mixing inside the polyurethane reaction mixture before the polyurethane reaction mixture is applied on the back side of the carrier. Once the polyurethane reaction mixture is placed on the back side of the carrier, hardening of the polyurethane reaction mixture is performed to form a solid polyurethane backing with a portion of the turf fiber which protrudes out of the back side of the carrier being securely embedded inside the solid mass of the polyurethane backing. The polyurethane backing enhances the structural strength of the artificial turf and the fiber pulling characteristic of the turf fiber. In addition, because of the addition of the biocide agent the artificial turf has antimicrobial property.

Preferably, the polyurethane reaction mixture enters inside the carrier structure before it is fully solidified thus providing antimicrobial property to the carrier. Depending on the structure of the carrier, the viscosity of the polyurethane reaction mixture, and the rate of the solidification of the polyurethane reaction mixture, the polyurethane reaction mixture can enter deeper inside the carrier to thus increase the antimicrobial, antibacterial and antifungal properties of the artificial turf. In some other embodiments the polyurethane reaction mixture, before it is fully solidified, enters through the carrier and also forms a thin coating on a front side of the carrier, thus fully covering both the back side and the front side of the carrier and also filling any voids inside the carrier. Preferably, the method further includes adding in the polyurethane reaction mixture a chelating agent. The chelating agent is added in an effective amount for sufficiently maintaining the polymerization reaction of the polyurethane reaction mixture.

Although the precise mechanism of the pyrithione zinc and of the chelating effects in the polymerization reaction is not well understood, the overall effect of the use of the pyrithione zinc in combination with the chelating agent is that the solidification reaction of the polyurethane reaction mixture is maintained sufficiently and results in the formation of a solid polyurethane backing on the carrier of the artificial turf which is substantially free of voids or bubbles.

The rate at which the solidification reaction of the polyurethane reaction mixture occurs depends on the quantity of the pyrithione zinc and of the chelating agent which acts to reduce the deleterious influence of pyrithione zinc of the polymerization rate. Thus, the amount of the chelating agent used can be adjusted based on the amount of the pyrithione zinc used and the desired time for the completion of the solidification reaction.

The chelating agent is used at a sufficient amount to achieve the desired crosslinking rate for the polyurethane reaction mixture. The amount of the chelating agent can vary according to the pyrithione zinc content, and the temperature.

Adding of the chelate agent is advantageous because it allows better control of the solidification rate of the polyurethane reaction mixture which allows more uniform application of the polyurethane reaction mixture over the back side of the carrier in a homogeneous manner without voids or gaps, thus forming a stronger coupling between the polyurethane backing and the carrier and also between the polyurethane backing and the turf fiber. The voids and gaps may also become infested with microbes, and therefore, eliminating them further enhances the antimicrobial property of the artificial turf. Using the chelating agent that counteracts the retardation reaction effect of the pyrithione zinc allows optimizing the amount of pyrithione zinc in the backing based on the desired antimicrobial characteristic. It also allows for better overall control of the solidification reaction of the polyurethane reaction mixture by adding one more control variable for controlling the crosslinking reaction. It has been unexpectedly found that the controlling of the crosslinking reaction (also referred to as the solidification reaction) by adjusting the amount of the chelating agent results in a more uniform distribution of the crosslinking density, thus resulting in a more uniform polyurethane backing. Too much of these alcohols as chelating agents, in particular an amount in excess of 10% by weight, may act as unspecific catalysts or "blowing agents". Blowing agents are not desired because the backing should be free of voids.

The zinc pyrithione is used as the antimicrobial agent in an amount of 0.05 wt% to 1.5 wt%, of the polyurethane reaction mixture, and, preferably, in an amount of 0.08 to 0.7 wt % of the polyurethane reaction mixture. More preferably, the zinc pyrithione is used as the antimicrobial agent in an amount of 0.1 wt% to 0.5 wt% of the polyurethane reaction mixture.

In some preferred embodiments, the method for manufacturing the artificial turf comprises preparing the polyurethane reaction mixture including the pyrithione zinc in an amount of from 0.08 wt% to 0.7 wt% of the polyurethane reaction mixture, incorporating the artificial turf fiber into the carrier, adding the polyurethane reaction mixture onto a back side of the carrier, and hardening the polyurethane reaction mixture on the back side of the carrier to form a polyurethane backing for securing the artificial turf fiber to the polyurethane backing.

In some embodiments the pyrithione zinc concentration is between 0.05 wt% to 0.2 wt % of the polyurethane reaction mixture. In an embodiment, the zinc pyrithione is used as the antimicrobial agent in an amount of 0.1 wt% of the polyurethane reaction mixture. It has been found that the zinc pyrithione is particularly effective against bacteria such as E. coli and S. aureus when added in the polyurethane reaction mixture in amounts of 0.1 wt% to 0.5 wt% of the polyurethane reaction mixture. The amount of the zinc pyrithione in the reaction mixture is calculated based on the total mass of the polyurethane reaction mixture including any filler.

The pyrithione zinc is added to the polyurethane reaction mixture before the hardening of the polyurethane reaction mixture.

The pyrithione zinc is a very effective antimicrobial agent exhibiting fungistatic, and antibacterial properties. The pyrithione zinc also disperses well in the polyurethane reaction mixture, thus ensuring a well dispersed distribution of the pyrithione zinc inside the polyurethane backing. However, it also has an effect in retarding the polymerization reaction of the polyurethane reaction mixture. Adding pyrithione zinc in an amount over the 1.5 wt% causes the polyurethane reaction mixture to harden too slowly making the curing of the polyurethane reaction mixture on the back side of the carrier insufficient for good processing practice. At an amount of 0.05 wt% of pyrithione zinc or less in the polyurethane reaction mixture, the effect of the pyrithione zinc is reduced to an insignificant amount.

Preferably, a suitable chelating agent is added in the polyurethane reaction mixture for maintaining the polymerization reaction of the polyurethane reaction mixture and counteracting the retardation effect of the pyrithione zinc. Preferably, the method includes adding in the polyurethane reaction mixture a chelating agent in an effective amount for sufficiently maintaining the polymerization reaction of the polyurethane reaction mixture to thereby allow the polyurethane reaction mixture with the pyrithione zinc to fully cover a back portion of the turf fiber and set uniformly on the back side of the carrier in a homogeneous manner without voids or gaps. Formation of voids and gaps should be avoided because they weaken the coupling between the polyurethane backing and the carrier and also between the polyurethane backing and the turf fiber. Depending on the structure and porosity of the carrier, the polyurethane reaction mixture containing the antimicrobial and the chelating agent can also enter deeper inside the carrier to thus increase the antimicrobial, antibacterial and antifungal properties of the artificial turf, while maintaining sufficient polymerization rates to obtain adequate cure.

Preferably, the pyrithione zinc and the chelating agent in the desired molar ratio are premixed together in a separate vessel before adding them in the polyurethane reaction mixture.

The making of the turf fiber includes generating a polymer mixture, extruding the polymer mixture into a monofilament, quenching the monofilament, reheating the monofilament, and stretching the reheated monofilament to form the monofilament into the artificial turf fiber. The generated polymer mixture further comprises a nucleating agent for crystallizing the polymer within and at the surface of the monofilament. The artificial turf fiber is a bundle of monofilaments.

It may be desirable to manufacture artificial turf fibers having a set of desired properties e.g., in respect to smoothness, tensile strength, resistance to shear forces, and/or resistance to splicing of fibers.

In some embodiments, the artificial turf fiber is a hydrophobic polyolefin fiber inserted into the carrier via a tufting process, or by weaving the artificial turf fiber into the carrier.

In some embodiments, the polyurethane is the reaction product of first and second polyols with an isocyanate, wherein the first polyol is polyether polyol and/or polyester polyol having at least two ("2") hydroxyl groups per molecule, wherein the second polyol is polybutadiene diol, wherein the isocyanate comprises isocyanate monomers, isocyanate polymers or isocyanate prepolymers or a mixture thereof, and wherein the isocyanate monomers, the isocyanate polymers and the isocyanate prepolymers have two or more isocyanate groups per molecule.

The polybutadiene diol is used in an amount of 0.5-10% by weight of a combination of the first polyol and the isocyanate, more preferably an amount of 1.0 - 9.0 % by weight of said combination and most preferably an amount of 4.0-8.0 % by weight of said combination. The polybutadiene diol has a number average molecular weight in the range of 1000 to 6000 g/mol, more preferably in the range of 1.500 to 4.500 g/mol.

The polyurethane reaction mixture further comprises a surfactant in an amount of 0.01% to 1.2 % by weight of the combination of the first and second polyols and the isocyanate, more preferably in an amount of 0.8%-1.0% by weight of said combination and most preferably in an amount of 0.05-0.15 % by weight of said combination, and the fluid polyurethane mass has a density of more than 1000 g/l, preferably having a density in the range of 1100 g/l - 1500 g/l, more preferably in a range of 1200 g/l - 1400 g/l.

The hardening of the fluid polyurethane mass can be performed by heating the polyurethane reaction mixture on the back side of the carrier to a temperature of 70-140°C.

Once the polyurethane backing is formed the artificial turf can be wound and stored in roll form.

The artificial turf made with the polyurethane antimicrobial backing is advantageous because it can prevent microbial buildup of fungi and bacteria and can have a longer useful life.

In addition, in some embodiments, the making of the polyurethane backing using the polybutadiene diol is particularly advantageous because it further strengthens the coupling of the backing with the turf fiber and is particularly suitable of fixing hydrophobic polyolefin fibers such as polyethylene fibers more firmly and more reliably. Because polyurethane is a hydrophilic material the Van-der-Waals forces between the fibers and the polyurethane backing may be weak and the fibers may be pulled out of a polyurethane backing when a tuft-withdrawal force is applied. By adding polybutadiene diol (PBD) in the reaction mixture used for creating the polyurethane in a polyaddition reaction, the polyurethane is made more hydrophobic and the attachment of the polyurethane to the fiber via Van-der-Waals forces is increased. In the polyaddition reaction, the PBD acts as a hydrophobic polyol that increases hydrophobicity of the polyurethane. The resulting polyurethane is more hydrophobic than a standard polyurethane and will attach more strongly to a polyethylene surface or fiber. The new polyurethane variant is used for the production of artificial turf capable of strongly fixing individual monofilaments, fibers made of multiple monofilaments or tapes made of hydrophobic material, e.g., PE, in the backing.

In a further beneficial aspect, the creation of the polyurethane backing according to embodiments of the invention may be advantageous as said type of backing is better protected against the effects of water. Applicant has observed that water, e.g., rain falling on artificial lawn of a sports field, may act as a softening agent in respect to the polyurethane backing. If polyurethane is contacted with water, the water softens the polyurethane and causes the polyurethane to swell. The swelling may cause the destruction of the mechanical fixing of the fibers both in polyester-based as well as in polyether-based polyurethane. Moreover, the contact with water may chemically destroy polyester-based polyurethane by saponification which may also result in the destruction of the mechanical fixing of the fibers in the polyurethane backing. Thus, in a further aspect, embodiments of the invention relate to a method for providing a hydrolytically stable form of polyurethane that does neither swell nor saponificate significantly when exposed to water and water-based liquids.

Thus, according to some embodiments, the polybutadiene diol is added to the polyols or to a reaction mixture comprising the polyols and the isocyanate for increasing the hydrophobicity of the polyurethane and/or for creating a hydrolytically stable form of polyurethane, i.e., a polyurethane that does neither swell nor saponificate when exposed to water and/or for strongly mechanically fixing hydrophobic polyolefin fibers incorporated at least partially in the polyurethane backing.

In a further beneficial aspect, chemical bonds between the PBD and the polyisocyanates are created, thereby preventing any delamination effect that may occur if hydrophilic and hydrophobic substances are combined in a single blend. The reaction that creates the chemical bonds is a polyaddition reaction whereby the first polyol as well as the PBD respectively react with the isocyanate to form polyurethanes. In yet another beneficial effect, the prevention of the swelling of the polyurethane backing because of the use of the PBD may prevent loss of the added antimicrobial agent and thus prolongs the antimicrobial characteristic of the artificial turf.

According to embodiments, the isocyanate is a diisocyanate. According to embodiments, the at least two hydroxyl groups per molecule of the first polyol are two terminal hydroxyl groups. According to embodiments, the polybutadiene diol has an amount of 0.5-10% by weight of a combination of the first polyol (i.e., the polyester-polyol or the polyether-polyol) and the isocyanate. According to some of said embodiments, the polybutadiene diol has an amount of 1.0 - 9 % by weight of said combination and preferably has an amount of 4.0-8.0 % by weight of said combination. Said features may be beneficial as it has been observed that this PBD concentration generates a polyurethane backing that fixes polyolefin fibers embedded therein so strongly that a so-called "stick slip effect" occurs, in particular when using highly hydrophobic monofilaments, e.g. PE-monofilaments: a stick-slip effect describes a particular form of relative movement of two surfaces (e.g. a PE-fiber surface and the polyurethane.-surface surrounding said fiber), whereby the movement of the surfaces alternates between sticking to each other and sliding over each other, with a corresponding change in the force of friction. Typically, the static friction coefficient (a heuristic number) between two surfaces is larger than the kinetic friction coefficient. If an applied force is large enough to overcome the static friction, then the reduction of the friction to the kinetic friction can cause a sudden jump in the velocity of the movement. Typically, the stick slip effect is considered as an unwanted effect, e.g., in respect to the relative movement of human skin and a PE (Polyethylene) fiber as in this context the risk of injuries and skin burns may be increased. However, applicant has surprisingly observed that the stick slip effect in the context of PE/polyurethane. surface movements is a desirable and useful effect as it increases the resistance of the fiber to tuft withdrawal forces. Even in case a pulling force is high enough to pull a fiber some distance out of the backing, the stick slip effect will cause the fiber to halt again, thereby causing the static friction coefficient rather the kinetic friction coefficient to take effect.

Thus, according to a further beneficial aspect of the invention, an antimicrobial polyurethane artificial turf backing is provided that mechanically fixes hydrophobic polyolefin fibers or monofilaments, in particular PE-based fibers and monofilaments, particularly well by showing the stick slip effect. In particular when the PBD is added to the reaction mix in the most preferred concentration range of 2.0-4.0 % by weight of a combination of the first polyol and the isocyanate, e.g., 3% by weight of said combination, the artificial turf fibers are sometimes fixed so firmly in the polyurethane backing that the fiber will in many cases be broken and torn apart rather than be pulled out of the backing.

Both the polyether-polyol and the polyester-polyol may consist of a single type of polyol or of a mixture of different types of polyols. Depending on the embodiment, the PBD and the first polyol can be added to the reaction mixture separately or can be contained in a single mixture that is mixed with the isocyanate.

According to embodiments, the first polyol is free of any PBD and hydrogenated PBD. In other words, the first polyol consists of one or more non-PBD-polyols. According to embodiments, the first polyol is preferably a polyether polyol. According to embodiments, the first polyol is preferably selected from a group comprising: a polycarbonate polyol, a polycaprolactone polyol, a propylene oxide based polyol, a polypropylene polyol, a polysulfide polyol, a polyether glycol like polytetramethylene ether glycol (PTMEG) or a mixture of one or more of said polyols. A "propylene oxide based polyol" may be generated from a monomer mix consisting of or comprising a propylene oxide monomer. In a further embodiment, the first polyol is a mixture of one or more of the aforementioned polyether polyols together with a di- or tri-glycol having a hydroxyl value ranging from 400- 2000 mg KOH/g. Preferably, said di- or tri-glycols are short chain di- or tri-glycols. For example, the di- or tri-glycols can be one or more of: diethylene glycol, dipropylene glycol, methylene glycol, propylene glycol, butylene glycol. Adding the di- or tri-glycols may be advantageous as the crosslinking-density in the polyurethane may be increased.

In further embodiments the first polyol comprises or consists of a mixture of a polyether polyol and a polyester polyol. Said polyester polyol can be, for example, vegetable oil-based polyols as e.g., a castor oil-based polyol as e.g., DESMOPHEN 1150 or soya bean oil-based polyols or gained from a re-esterification process.

According to embodiments, the first polyol has a number average molecular weight of 500-6000 g/mol, more preferably between 1.500 and 4.000 g/mol. The number average molecular weight, Mn, is the total weight of all the polymer molecules in a sample, divided by the total number of polymer molecules in the sample.

According to embodiments, the polyether polyols is a bifunctional polyether polyol having a hydroxyl value of about 50-60 mg KOH/g. According to another example, a bifunctional polyether polyol having a hydroxyl number of about 26 - 30 mg KOH/g can be used, e.g., a polyol based on propylene oxide having a number average molecular weight of about 4000 g/mol. However, it is also possible to use polyether polyols having a lower or even higher molecular weight.

According to embodiments, the polybutadiene diol has a number average molecular weight in the range of 1000-6000 g/mol, more preferably between 1.500 and 4.500 g/mol. According to preferred embodiments, the polybutadiene diol is a hydrogenated polybutadiene diol. Using hydrogenated PBD may provide for an increased chemical stability of the generated polyurethane. In particular, the saturated nature of the hydrogenated PBD may prevent the polyurethane backing lose its mechanical properties such as flexibility, elongation, and strength. The hydrogenated PBD improves in comparison to the non-hydrogenated version the miscibility in the PU-PBD mixture.

For example, a hydrogenated polybutadiene diol having a number average molecular weight of about 2000 g/mol whose double bonds have been fully (> 97%) hydrogenated, the hydroxyl units being retained, can be used as the PBD that is added to the reaction mix. According to another example, a polybutadiene diol having a number average molecular weight of about 3000 g/mol can be used as the PBD that is added to the reaction mix.

According to embodiments, the method further comprises adding a wetting agent to a mixture comprising the first and/or second polyols and/or the isocyanate. Adding a wetting agent to the reaction mixture for creating the polyurethane reaction mixture may be advantageous as the wetting agent reduces the surface tension and helps the polyurethane reaction mixture to wet the carrier (that can be, for example, a hydrophobic polyolefin-based textile) and/or to wet the monofilaments and fibers incorporated at least partially in the polyurethane backing. Wetting monofilaments is a particularly demanding task for fixing tufted bundles of PE monofilaments in a polyurethane coated backing. This is because monofilament tuft bundles are often aligned very close to each other, thereby prohibiting any polyurethane liquid or polyurethane foam to invade the space within a tufted monofilament bundle.

Using a wetting agent may be advantageous as the PBD has been observed to increase the viscosity of the liquid polyurethane reaction mixture compared to the polyurethane created from the same reaction mixture but lacking PBD. It has been observed that the wetting of the carrier textile and/or the wetting of the fibers is reduced by an increase of polyurethane viscosity. Using the wetting agent compensates for this effect, thereby allowing to increase the hydrophobicity without negatively affecting the wetting of the fibers.

In a further beneficial aspect, the wetting agent allows using higher PBD amounts and thus generating a more hydrophobic polyurethane as the wetting agent compensates for the increased viscosity.

According to embodiments, the wetting agent is a surfactant having an amount of 0.01% to 1.2 % by weight of a combination of the first and second polyols and the isocyanate, more preferably an amount of 0.8%-1.0% by weight of said combination and most preferably an amount of 0.05-0.15 % by weight of said combination. Said surfactant concentration is typically not high enough for strong foam generation and for controlling the density and volume of the polyurethane foam applied on the back side of an artificial turf backing carrier. However, as the surfactant according to embodiments of the invention is not added for creating foam but rather as a wetting agent, the above-mentioned concentration ranges are preferable.

The "back side" of the carrier as used herein is the side opposite to the side from which the larger portions of the fibers emanate.

"Surfactants" as used herein are compounds that lower the surface tension (or interfacial tension) between two liquids or between a liquid and a solid. Surfactants may be, for example, amphiphilic substances, in particular organic amphiphilic substances which contain both hydrophobic groups and hydrophilic groups. Therefore, a surfactant contains both a water-insoluble (or oil-soluble) component and a water-soluble component. Surfactants will diffuse in the liquid polyurethane reaction mixture and will adsorb at interfaces between the polyurethane reaction mixture and the hydrophobic monofilaments and/or the hydrophobic carrier of the backing. A surfactant may be, for example, a hydrocarbon surfactant such as, for example, Triton X-100, or, more preferably, a fluorosurfactant or a mixture of hydrocarbon surfactant and a fluorosurfactant. Fluorosurfactants have a hydrophobic tail in the form of a straight chain fluorocarbon and a polar portion. Fluorosurfactants are particularly stable, also in harsh thermal and/or chemical environments.

In a preferred embodiment, a silicone based surfactant is used. Particularly preferred as surfactant is a polyalkyleneoxide-dimethylsiloxane copolymer.

According to embodiments, the method comprises adding an oil to the mixture comprising the polyols and/or comprising the isocyanate. The oil is added in an amount of 0.5% to 4%, more preferably 0.7% to 1.2% by weight of a combination of the polyols and the isocyanate. Preferably, the oil is a mineral oil, still preferably a pale oil or a mixture of pale oils. An oil is any neutral, nonpolar chemical substance that is a viscous liquid at ambient temperatures and is both hydrophobic and lipophilic. Oils have a high carbon and hydrogen content and are usually flammable and surface active. "Pale oils" or "white oils" as used herein are highly refined mineral oils that are only lightly colored or colorless and that are chemically inert. For example, a petroleum lubricating or process oil refined until its color (measured by transmitted light) is straw to pale yellow is a "pale oil". Preferably, the pale oils used for embodiments of the invention are also pure, stable, odorless and non-toxic. The term "white oil" is a misnomer, in that white oils are not white, but crystal clear. Pale oils can be produced from a variety of substances, depending on the process used. For example, naphthenic oils and some mineral oils can be used as pale oils.

For instance, light colored, non-staining naphthenic oils refined from specially selected wax-free crude through the use of severe hydrogenation can be used, e.g., PALE OIL 40 - NYTEX 5130 of NYNAS.

The term "tufting" as used herein refers to a method of incorporating a fiber into an existing carrier. Short U-shaped loops of fibers are introduced through the carrier from one side so that their ends point outside of the carrier in the other direction. Usually, the tuft yarns form a regular array of "dots" on the other side. On the one side of the carrier where the U-shaped loops are located, the tuft fibers may be tied for security, although they need not be. The ends of the tuft yarns can then optionally be frayed or otherwise processed, so that they will subsequently create a dense layer of fibers protruding from the carrier.

The term "weaving" as used herein is a method of incorporating an artificial turf fiber (which can be a monofilament or a bundle of monofilaments) into an existing carrier, whereby the artificial turf fiber and the fiber(s) that built the carrier are interlaced. The interlaced fibers and the mesh form a textile like or cloth like structure. When an artificial tuft fiber is incorporated by weaving, the fiber interlaces a series of mesh fibers at least three times. Thus, when a fiber is incorporated by weaving rather than tufting, a higher fraction of the artificial turf fiber is interlaced in the carrier material. This may increase the resistance to wear and tear of the artificial turf.

Adding pale oil may further reduce the viscosity of the liquid polyurethane reaction mixture, thereby increasing the wetting of the carrier and/or the artificial turf monomers and fibers and increasing the strength of the mechanical fixing.

According to embodiments, the method further comprises adding a catalyst to the polyols or to the isocyanate or to a reaction mixture comprising the same.

According to embodiments, the fluid polyurethane mass has a density of more than 1000 g/l, preferably having a density in the range of 1100 g/l - 1500 g/l, more preferably in a range of 1200 g/l - 1400 g/l. The first polyol and/or the catalyst may be chosen such that the density of the generated polyurethane reaction mixture is in at least one of the specified density ranges. Said density ranges have been observed to provide Polyurethane artificial turf backings that can be easily laid without bulging, that is elastic and robust against various pulling, pushing and shear forces.

According to some embodiments, the liquid polyurethane reaction mixture is a non-foam polyurethane, i.e., a polyurethane that is (substantially) nonporous. Foams and fluids in this high-density range are often highly viscous and often do not wet fibers and in particular monofilaments within monofilament bundles appropriately. However, by using a more hydrophobic polyurethane form, optionally further comprising a wetting agent, also polyurethane reaction mixtures having the above-mentioned high density can be used for firmly fixing PE filaments by Van-der-Waals forces. Thus, embodiments of the invention may allow to firmly fix hydrophobic fibers also in a high-density polyurethane backing.

According to embodiments, incorporating the artificial turf fiber into the carrier comprises: tufting the artificial turf fiber into the carrier. According to alternative embodiments, incorporating the artificial turf fiber into the carrier comprises weaving the artificial turf fiber into the carrier.

According to embodiments, the artificial turf fiber is a bundle of monofilaments. In this context, using a more hydrophobic polyurethane version, optionally in combination with a wetting agent, is particularly advantageous as standard polyurethane foams and fluids usually are not able to wet the monofilaments located at the inside of a monofilament bundle. By wetting also, the monofilaments inside said bundles, the mechanical fixing is significantly increased.

According to embodiments, the artificial turf fiber is a hydrophobic polyolefin fiber, e.g., a polyethylene (PE) fiber, a polypropylene (PP) fiber, a polybutylene fiber or a fiber consisting of a polymer blend comprising a hydrophobic polyolefin as main component.

Depending on the embodiment, the hardening process may be performed passively, e.g., by incubating the liquid polyurethane reaction mixture applied and dispersed on the back side of the carrier at room temperature, or by heating the polyurethane backing for a given time to temperature significantly above room temperature.

According to some embodiments, the hardening of the fluid polyurethane mass comprises heating the polyurethane mass having been applied and dispersed on the back side of the carrier to a temperature of 70-140°C. For instance, the heat is applied for a time period of 1-5 minutes, preferably 2-3 minutes.

The hardening process, also referred to as "curing" process, is performed so that the polyurethane reaction mixture hardens and develops its strength. The hardening (or curing) involves reacting NCO terminal diisocyanates with hydroxyl terminal polyols, The hardened polyurethane reaction mixture on the backing will tightly enclose the portions of the fibers having been incorporated in the fluid polyurethane mass.

Like numbered elements in the figures are either equivalent elements or perform the same function. Elements which have been discussed previously will not necessarily be discussed in later figures if the function is equivalent.

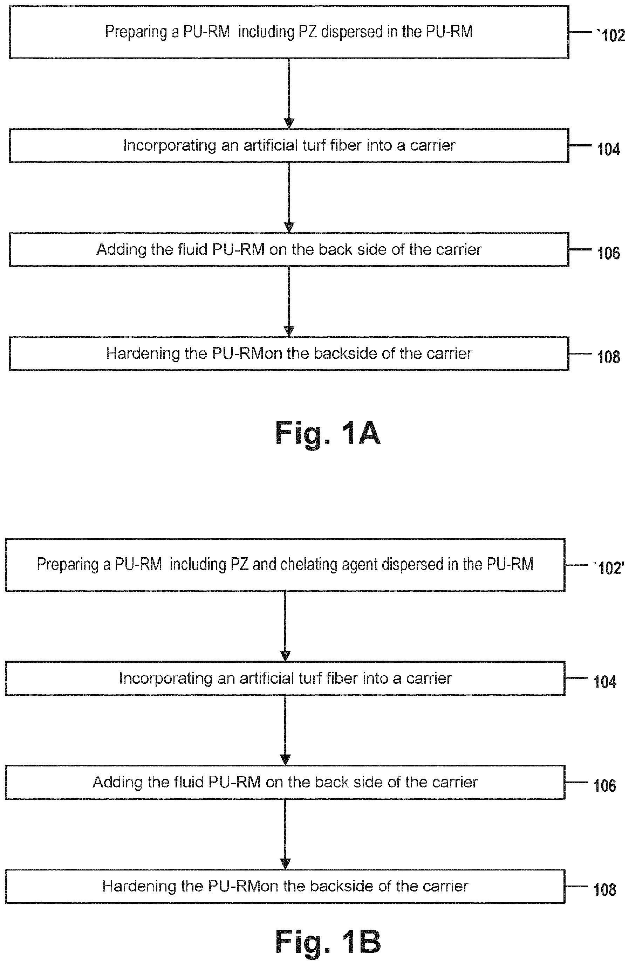

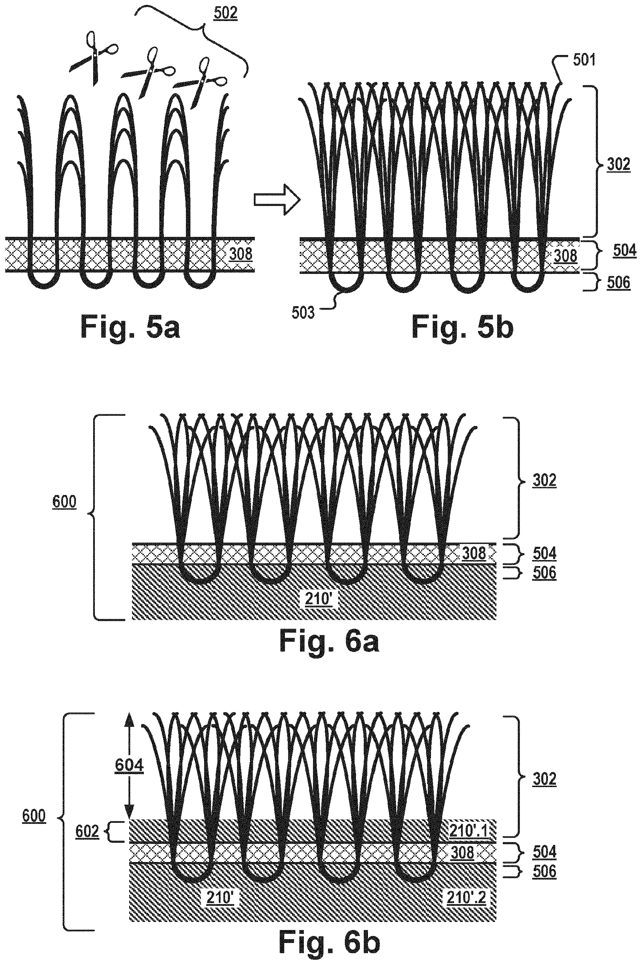

Figure 1A illustrates a flowchart of a method of manufacturing a polyurethane artificial turf backing 602 as shown, for example, in Figure 6. Referring now to Figure 1A a method for manufacturing an artificial turf is provided, the method comprising in step 102 preparing a polyurethane reaction mixture (PU-RM) including a pyrithione zinc (PZ) in an effective amount of from 0.05 wt% to 1.5 wt%, incorporating in step 104 an artificial turf fiber into a carrier, in step 106 adding the polyurethane reaction mixture onto a back side of the carrier, and in step 108 hardening the polyurethane reaction mixture on the back side of the carrier to form a polyurethane backing. The polyurethane backing secures the artificial turf fiber and also provides support and structural strength to the carrier. The method is characterized in that the polyurethane reaction mixture includes an effective amount of the pyrithione zinc which is added to the polyurethane reaction mixture before the hardening of the polyurethane reaction mixture.

Preferably, the pyrithione zinc is added in an amount of 0.08 to 0.7 wt%, more preferably in an amount of 0.1 to 0.5 wt%, and most preferably in an amount of 0.3 wt% to 0.5 wt% of the polyurethane reaction mixture. The pyrithione zinc has fungistatic, antimicrobial, and antibacterial properties and disperses well in the polyurethane reaction mixture. However, it also has an effect in retarding the polymerization reaction of the polyurethane reaction mixture. Adding pyrithione zinc in an amount over the 1.5 wt% causes the polyurethane reaction mixture to harden too slowly making the application of the polyurethane reaction mixture on the back side of the carrier impractical. At an amount of 0.05 wt% of pyrithione zinc or less in the polyurethane reaction mixture, the effect of the pyrithione zinc is reduced to an insignificant amount.

In an embodiment a silicone based surfactant is used. In a particularly preferred embodiment, the silicone based surfactant is a polyalkyleneoxidimethylsiloxane copolymer.

In some embodiments, in step 102, the creation of the liquid polyurethane reaction mixture comprises reacting first and second polyols with an isocyanate. The first polyol is a polyether polyol or a polyester polyol or a mixture thereof, and the second polyol is polybutadiene diol. The pyrithione zinc is preferably added together with the PBD in a separate container than a container containing the first polyol with the isocyanate. The polyether and/or polyester polyol have two hydroxyl groups per molecule.

In a preferred embodiment, the creation of the liquid polyurethane mixture includes creating a first mixture by mixing together first all the polyols, fillers, curing agents, PBD, zinc pyrithione pre-dispersed in chelating agent, optional agents including any optional wetting agents, etc. All of these materials may be added together from separate containers. Then, the forming of the liquid polyurethane reaction mixture is performed by mixing an isocyanate into the first mixture.

Polyether polyols are made by reacting epoxides like ethylene oxide or propylene oxide with the multifunctional initiator in the presence of a catalyst, often a strong base such as potassium hydroxide or a double metal cyanide catalyst such as zinc reduced to-t-butanol complex. Common polyether polyols are polyethylene glycol, polypropylene glycol, and poly(tetramethylene ether) glycol.

Polyester polyols are formed by condensation or step-growth polymerization of polyols and dicarboxylic acids (or their derivatives), for example diethylene glycol reacting with phthalic acid. Alternatively, the hydroxyl group and the carboxylic acid (or their derivatives) may be within the same molecule, as in the case of caprolactone. Polyether polyols and/or polyester polyols can be bought ready-made from various suppliers.

The isocyanate comprises isocyanate monomers, isocyanate polymers or isocyanate prepolymers or a mixture of isocyanate monomers, isocyanate polymers and isocyanate prepolymers. The isocyanate monomers, polymers and prepolymers have two or more isocyanate groups per molecule.

For example, the isocyanate can be methylene diphenyl diisocyanate ("MDI"). MDI is an aromatic diisocyanate. It exists in three isomers, 2,2'-MDI, 2,4'-MDI, and 4,4'-MDI. Embodiments of the invention may be based on any of said isomers, preferably the 4,4' isomer is used as the isocyanate. MDI reacts with the polyols (i.e., with the PBD and the polyether polyol or the polyester polyol) in the manufacture of the polyurethane reaction mixture.

In step 104, one or more turf fibers are incorporated into a carrier, e.g., a textile or other material comprising perforations. For example, the incorporation may comprise weaving, spinning, twisting, rewinding, and/or bundling the monofilament, e.g., a stretched monofilament, into the artificial turf fiber and then incorporating the fiber into the carrier. This technique of manufacturing artificial turf is known e.g., from United States patent application US 20120125474 A1.

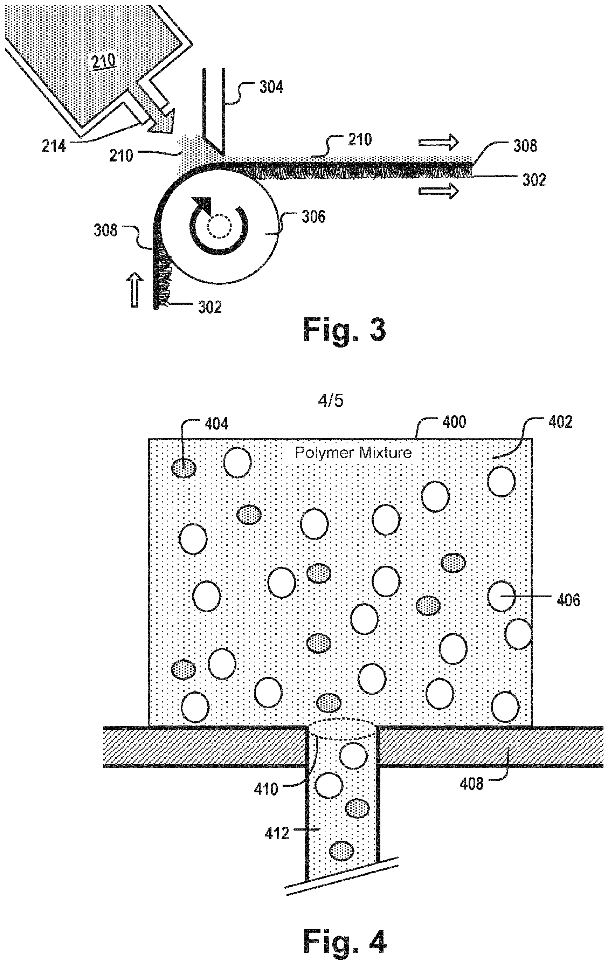

In step 106, the polyurethane reaction mixture generated in step 102 is added on the back side of the back side of the carrier (see e.g., Figure 3). Thereby, the fibers, including the monofilaments within bundled fibers, and the carrier material are wetted by the liquid polyurethane mixture.

In step 108, the liquid polyurethane reaction mixture solidifies into a solid polyurethane artificial turf backing that strongly fixes hydrophobic fibers without the need to create chemical bonds between the polyurethane backing and the fiber material. For example, the polyurethane reaction mixture on the back side of the carrier may be hardened at room temperature or in an oven.

Figure 1B illustrates a flowchart of a preferred method of manufacturing a polyurethane artificial turf backing 602 which includes the use of a chelating agent for preventing the zinc pyrithione from slowing down the polymerization reaction of the polyurethane reaction mixture. As illustrated in Figure 1B a suitable chelating agent is added in the polyurethane reaction mixture in step 102' for maintaining the polymerization reaction of the polyurethane reaction mixture and counteracting the reaction retarding effect of the pyrithione zinc. Preferably, the method includes adding in the polyurethane reaction mixture a chelating agent in an effective amount for sufficiently maintaining the polymerization reaction of the polyurethane reaction mixture to thereby allow the polyurethane reaction mixture with the biocide agent to fully cover a back portion of the turf fiber and set uniformly on the back side of the carrier in a homogeneous manner without voids or gaps thus forming a stronger coupling between the polyurethane backing and the carrier and also between the polyurethane backing and the turf fiber. Depending on the porosity of the carrier the polyurethane reaction mixture containing the biocide agent and the chelating agent can also enter deeper inside the carrier to thus increase the antimicrobial, antibacterial and antifungal properties of the artificial turf.

Preferably, the zinc pyrithione is pre-dispersed in the chelating agent in order to minimize the potential of the zinc pyrithione to chemically affect the curing agent. This is because, if all the materials are added together at the same time, there would be greater potential for the zinc pyrithione to interact with the catalyst.

In some embodiments, in step 102', the creation of the liquid polyurethane reaction mixture comprises reacting first and second polyols with an isocyanate as described for step 102 of Figure 1A. In the embodiment of Figure 1B, steps 104, 106, and 108 are as described above with reference to Figure 1A.

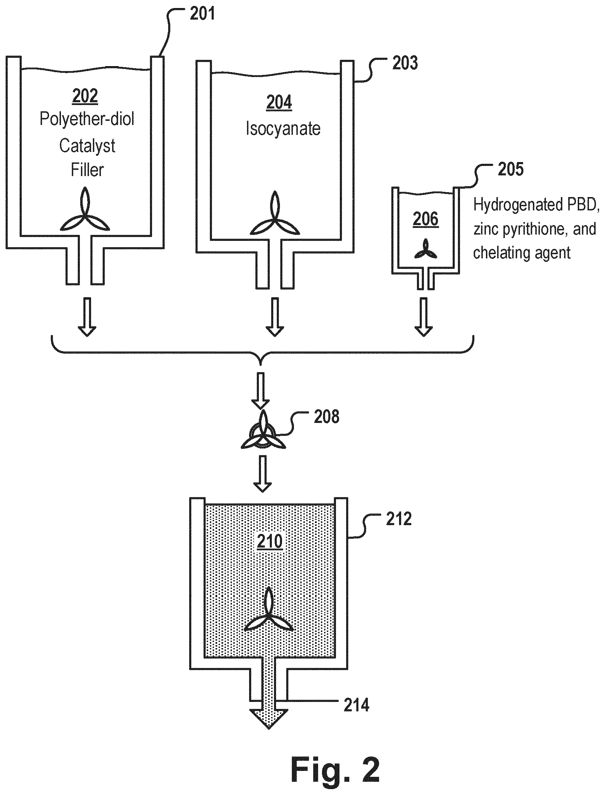

Figure 2 illustrates multiple tanks and mixers comprising educts for creating the polyurethane reaction mixture according to an example. A first mixing unit 201 (also referred to as first tank or first container) is used for creating a first mixture 202 comprising the polyether polyol or the polyester polyol. For example, the first mixture 202 comprises a polyether-polyol, e.g., a polyether-polyol having a number average molecular weight of about 4000 g/mol, e.g., a polyol based on polymerized propylene oxide. The polyether polyol may be obtained e.g., in the form of a ready-made polyol.

Optionally, the first mixture 202 comprises filler materials. Adding a filler may reduce cost and/or help to achieve a particular look or weight. Fillers can be, for example selected from the group ground limestone, precipitated calcium carbonate, China clay, coal fly ash, silicates and other inert material including non-reactive liquids. Moreover, fillers with flame retardant and /or intumescent efficiency like aluminum hydroxide (Al(OH)₃) or ammonium polyphosphate (NH₄PO₃]ₙ(OH)₂) can be used or mixtures of the aforementioned fillers.

Moreover, the first mixture 202 may comprise a catalyst for boosting the polyaddition reaction that generates the polyurethane. The catalyst can be, for example, amine compounds and metal-organo complexes. Traditional amine catalysts have been tertiary amines such as triethylenediamine (TEDA, 1,4-diazabicyclo[2.2.2]octane or DABCO), dimethylcyclohexylamine (DMCHA), and dimethylethanolamine (DMEA). Metal-organo complexes used as polyurethane catalysts can be based e.g., on mercury (e.g., mercury carboxylates), lead, tin (e.g., alkyl tin carboxylates and oxides), bismuth, and zinc (e.g., bismuth and zinc carboxylates). The first mixture is then stored in the first tank 201, e.g., a day tank, i.e., a tank sized to provide a day's worth of usage.

Preferably a mixture of tin organic and an amine catalyst is used. Suitable amines include, for example, Cyclohexyldimethylamine, 2-dimethylaminoethanol, 4-ethylmorpholine, N,N,4-trimethylpiperazine-1-ethylamine, 1,4-dimethylpiperazine, 3-aminopropyldimethylamine, 2,2'-iminodiethanol, 1-methylimidazole, 1,2-dimethylimidazole, 2-[[2-(dimethylamino)ethyl]methylamino]ethanol, N-[3-(dimethylamino)propyl]-N,N',N'-trimethylpropane-1,3-diamine, formic acid, compound with 2,2'-oxybis[N,N-dimethylethylamine] (2:1), 1,1'-[[3-(dimethylamino)propyl]imino]bispropan-2-ol, + 2-[(2-[2-(dimethylamino)ethoxy]ethyl)methylamino]ethanol, Benzyldimethylamine 4-methylmorpholine, N,N,N',N'-tetramethylhexamethylenediamine, 2-[2-(dimethylamino)ethoxy]ethanol, 1,4-diazabicyclooctane, Bis(2-dimethylaminoethyl)(methyl)amine, N,N,N',N'-tetramethyl-2,2'-oxybis(ethylamine, 2,2'-dimorpholinyldiethyl ether, 1,8-diazabicyclo[5.4.0]undec-7-ene, N'-[3-(dimethylamino)propyl]-N,N-dimethylpropane-1,3-diamine, N,N,N',N',N",N"-hexamethyl-1,3,5-triazine-1,3,5(2H,4H,6H)-tripropanamine, and N,N-bis[3-(dimethylamino)propyl]-N',N'-dimethylpropane-1,3-diamine.

The second mixture 204, i.e., the isocyanate monomer/polymer/prepolymers mixture, e.g., MDI, is stored in a second tank 203 that is preferably also a day tank. A further container 205 that is typically of a smaller size than the first and second tank comprises a third substance mixture 206 including the pyrithione zinc ("PZ"), and preferably also the chelating agent.

In a variation of the illustrated embodiment of FIG. 2, the PZ and the chelating agent are mixed separately in a fourth container (not shown) and added to the reaction mixture while the PBD together with other additives, pale oil etc. is added via the third container 205 separately.

In the embodiment illustrated in FIG. 2, PBD is also added in the third substance mixture 206, however, it should be understood that in other embodiments no PBD is added. According to some embodiments, the PZ and the chelating agent are mixed together in a separate tank (not shown) and then added to the reaction mixture.

Optionally further substances such as a wetting agent, pale oil and/or one or more further additives may be added. The one or more further additives can be, for example, flame retardants, pigments, extenders, cross linkers, blowing agents etc. The container 203 may be part of or coupled to a blender 208. The blender 208 receives the first mixture 202 from the first container 201, receives the second mixture 204 from the second container 203 and receives the PBD, the pyrithione zinc, the chelating agent, and the one or more optional substances (wetting agent, pale oil and/or further additives) from the third container 205. The blender 208 blends the first, second and third mixtures received from the respective tanks in amounts suited to generate a polyurethane reaction mixture 210 whose substance concentrations are within the ranges specified herein for embodiments of the invention. For example, the first, second and third mixtures are blended such that the number of OH groups in the first polyol molecules in the first mixture in combination with the number of OH groups in the PBD molecules in the third mixture will roughly correspond (e.g., in a range of ratios ranging from "0.9:1" to "1:0.9") to the number of NCO groups in the isocyanate molecules (monomers and prepolymers). The third mixture 206 is added by the blender 208 to the reaction mixture 210 in such an amount that the PBD in the reaction mixture has a concentration range of 0.05-5% by weight of a combination of the first polyol and the isocyanate.

Examples 1-4 of a PU reaction mixture are given below in Table 1:

**Table 1**

| Description | % by weight of the PU reaction mixture | % by weight of the PU reaction mixture | % by weight of the PU reaction mixture | % by weight of the PU reaction mixture |
|---|---|---|---|---|
| | Example 1 | Example 2 | Example 3 | Example 4 |
| Hydrogenated hydroxyl-terminated polybutadiene (PBD): | 0% | 0% | 0% | 0.1% |
| Pyrithione zinc | 0.1% | 0.3% | 0.1% | 0.3% |
| Chelating agent polyalkyleneoxidimethylsiloxane copolymer | 0.0% | 0.0% | 0.1% | 0.7% |
| Polyol 1 propylene oxide polyol | 4,10% | 4,10 % | 4,10% | 4,10% |
| Polyol 2 polytetramethylene ether glycol (PTMEG) | 24,35% | 24,15% | 24,25% | 23,55% |
| fillers, catalyst & pigments | 54.21% | 54.21% | 54.21% | 54.21% |
| Isocyanate component MDI | 17.24 % | 17.24 % | 17.24 % | 17.24 % |

The reaction mixtures were examined for their antimicrobial properties and for the reaction speeds. All the PU reaction mixtures and their resulting PU backing were observed to provide a PU backing with an effective antimicrobial property.

It was also observed that the reaction speed was reduced with increasing amounts of the PZ in examples 1 and 2. However, the reduction of the reaction speed was moderated by the addition of the chelating agents in examples 3 and 4.

In examples 1-3 no PBD was used. In example 4 where PBD was also added exhibited increased effectiveness of the antimicrobial agent, presumably because of the increased hydrophobicity of the PU backing imparted by the addition of the PBD.

According to embodiments, the first and second mixtures 202 and 204 are supplied as "two pack systems" or "two component systems" wherein the polyol part acts as the first mixture 202 in the first tank 201 and the polyisocyanates part acts as the second mixture 204 in the second tank 203. While the first and second mixtures may be bought as ready-made two-component polyurethane-generation systems, the third mixture 206 in container 205 may be customized to specific needs of a customer, e.g., by adding a certain pigment to achieve a desired coloring effect or by adding a certain amount of PBD and/or oil and wetting agent in order to achieve a desired viscosity given a desired polyurethane density. As described in this example, the pyrithione zinc and the chelating agent are added in the third mixture in container 206 which may be customized.

The blender 208 may be a low-pressure gear pump, which produces a desired mixing ratio of the first, second and third mixtures. Ratio and material distribution are driven by a computer assisted equipment. Despite the viscosity of the polyurethane reaction mixture 210, the polyurethane reaction mixture enters deeply into the tufts of artificial grass, and wets the textile carrier and the monofilaments contained therein.

The polyurethane reaction mixture 210 generated by the blender 208 is output to a container 212 that may have the form of a hose. The chamber 212 has an opening 214 that leads to a coater, e.g., a "knife over roll" backing assembly as depicted, for example, in figure 3. Typically, the reaction mixture output by the blender 208 reaches the opening 214 being part of the backing assembly within 30 seconds. At this point, the polyaddition reactions resulting in the generation of the liquid polyurethane reaction mixture used for backing a carrier textile of a piece of artificial turf will largely have completed already, but some reactions may still continue during the backing process.

According to embodiments, the first polyol(s),(optionally the PBD) and the isocyanate in total constitute at least 25%, according to other embodiments at least 40%, or even more than 95% of the total amount of the total reaction mix used for generating the liquid polyurethane reaction mixture that - after a curing process - is used as the artificial turf backing. This means that the totality of the antimicrobial agent, the chelating agent, the fillers, wetting agents, pale oils and any further additives (e.g., extenders, cross linkers, surfactants, flame retardants, blowing agents, pigments, and so on) typically constitutes less than 75%, or less than 60%, or in further embodiments less than 5% by weight of the reaction mix used for generating the polyurethane. In a specific example, the reaction mixture comprises in weight percentages about 21.5% isocyanate, 0.5 % PBD, 21.5 % first polyol, 2.1% catalyst, 0.5% pyrithione zinc, 2.5 % additives like oils, dyes or flame retardants, and 51.45% filler material.

In another specific example, the reaction mixture comprises about 20% isocyanate, 0.1% PBD, 20 % first polyol, 2.1% catalyst, 0.5% pyrithione zinc, 4.0% (1,2-diaminoethane)-initiated polyol as the chelating agent, 2.0 % additives like oils, dyes or flame retardants, and 51.4% filler material.

In yet another specific example, the reaction mixture comprises about 19.0% isocyanate, 0.3% PBD, 19.0 % first polyol, 2.0% catalyst, 0.7% pyrithione zinc, 7% (2-aminoethyl ethanolamine)-initiated polyol as the chelating agent, 2.0 % additives like oils, dyes or flame retardants, and 50.0% filler material. In some example embodiments the reaction mixture does not comprise any filler material.

According to preferred embodiments, the liquid polyurethane reaction mixture is a non-foam polyurethane, i.e., a polyurethane that is (substantially) nonporous.

Polyols or polyhydroxylated compounds are known to absorb water and generally are the source for the introduction of water into the formulation. Moisture is introduced either in the polyhydroxylated compound or in some other ingredient, and this moisture can react with the isocyanate to produce urea linkages and carbon dioxide. The urea linkages are strong and desirable; however, the carbon dioxide causes bubbles to appear in the product. In many cases, the presence of bubbles in the product weakens the structure of the polyurethane backing. Therefore, according to embodiments of the invention, the reaction conditions and educts are chosen such that a non-foamed liquid polyurethane reaction mixture 210 is generated. The generation of "non-foamed" liquid polyurethane reaction mixtures is described, for example, in "Polyurethanes: Science, Technology, Markets, and Trends", Mark F. Sonnenschein, ISBN: 978-1-118-73791-0.

Figure 3 illustrates a "knife over roll" polyurethane backing process and a corresponding backing assembly. The liquid, viscous reaction mixture 210, which is also referred to as liquid polyurethane reaction mixture upon leaving the opening 214 of the container 212, is applied on a carrier 308. A plurality of artificial turf fibers 501 protrude from the front side of the carrier. The liquid polyurethane reaction mixture 210 is applied on the back side of the carrier. The polyurethane reaction mixture is applied continuously while a roll 306 causes the carrier 308 to move in a direction indicated by the arrows. A "knife" 304 shown in cross section view is located at a defined distance above the carrier 308 and ensures that the viscous polyurethane reaction mixture 210 passing the space between the knife 304 and the carrier 308 has a defined height.

According to preferred embodiments, the liquid polyurethane reaction mixture is a non-foam polyurethane, i.e., a polyurethane that is (substantially) nonporous. The high viscosity of the polyurethane reaction mixture according to embodiments of the invention and the configuration and dimensions of the opening 214 and the speed of the polyurethane reaction mixture flow through this opening are chosen such that a defined amount of polyurethane reaction mixture builds up and accumulates on the front side of the knife 304. This ensures that the thickness of the polyurethane backing of the generated piece of artificial turf is constant.

After the polyurethane reaction mixture 210 is homogeneously applied on the back side of the carrier 308, it is hardened (increase of viscosity) by keeping the coated piece of artificial turf for about 10 minutes at room temperature. Typically, the polyurethane backing is solid 30 minutes after its application on the carrier.

Preferably, in order to speed up the solidification, the artificial turf once the polyurethane reaction mixture is placed on the back side of the artificial turf is exposed to an elevated temperature around 100°C. Typically, after 90 seconds at elevated temperature, 90 to 95% of the polyurethane reaction mixture is "cured" (is in solid state). The heating may be performed, for example, in an oven. For example, the backing assembly may automatically transport the coated piece of artificial turf in an oven.

**Figure 4** illustrates a liquid polymer mixture 400 for producing a monofilament 412 in an extrusion process. The polymer is a polyolefin, e.g., a polyethylene mixture. The polymer mixture 400 comprises additives 404, 406 such as UV-stabilizers, pigments, flame retardants or the like. A screw, piston or other device is used to force the polymer mixture 400 through a hole 410 in a plate 408. This causes the polymer mixture 400 to be extruded into a monofilament 412.

In some embodiments, the polymer mixture may comprise polymer beads of a more rigid polymer, e.g., polyamide. Due to flow dynamics during the extrusion process, the beads will tend to concentrate in the center of the monofilament 412. This may lead to a concentration of rigid, thread-like PA regions in the core region of the monofilament while the surface of the monofilament almost completely consists of the hydrophobic PE. Thus, a fiber with increased resilience is provided which has a soft PE surface that protects against injuries and skin burns which, however, has a very hydrophobic surface and may therefore easily detach from a polar polyurethane backing.

Thus, the monofilament is produced by feeding the polymer mixture 400 into a fiber producing extrusion line. The melt mixture is passing the extrusion tool, i.e., a spinneret plate or a wide slot nozzle, forming the melt flow into a filament or tape form, is quenched or cooled in a water spin bath, dried and stretched by passing rotating heated godets with different rotational speed and/or a heating oven. The monofilament or fiber may later be annealed online in a second step passing a further heating oven and/or set of heated godets.

According to embodiments, manufacturing an artificial turf fiber (which may comprise one or more monofilaments 412) comprises forming the stretched monofilament into a yarn. Multiple, for example 4 to 8 monofilaments, could be formed or finished into a yarn.

According to embodiments, the extrusion is performed at a pressure of 40-140 bars, more preferably between 60-100 bars. The polymer mixture may be created by adding polymer granules to a solid polymer composition that is mixed and heated until all polymer is melted. For example, the polymer mixture may be heated to reach at the time of extrusion a temperature of 190-260°C, more preferably 210-250°C.

According to embodiments, the stretching comprises stretching the reheated monofilament according to a stretch factor in the range of 1.1-8, more preferably in the range of 3-7.

According to embodiments, the quenching is performed in a quenching solution having a temperature of 10 - 60°C, more preferably between 25°C - 45°C.

According to embodiments, the incorporation of the artificial turf fiber into the carrier comprises tufting or weaving the artificial turf fiber into the carrier.

According to embodiments, the quenching solution, e.g., a water bath, has a temperature (right after the extrusion nozzle or hole(s)) of 10 - 60°C, more preferably between 25°C - 45°C, and even more preferably between 32°C - 40°C.

According to embodiments, the extrusion is performed at a pressure of 80 bar, the polymer mixture at time of extrusion has a temperature of 230°C, the stretch factor is 5 and the quenching solution, e.g., a water bath, has a temperature of 35°C.

Referring to Figure 5, the incorporating of the turf fiber 501 into the carrier 308 includes positioning the fiber 501 so that a first portion of the fiber 302 is protruding to the front side of the carrier (also referred to hereinafter as the front portion of the fiber), a second portion 506 of the fiber is located at the back side of the carrier (also referred to hereinafter as the back portion of the fiber), and a third portion of the fiber 504 is inside the carrier (referred to also as the middle portion of the fiber).

According to a second aspect of the present invention there is provided an artificial turf with an antimicrobial polyurethane backing. Referring to Figure 6 some embodiments of the artificial turf is provided comprising a carrier 308, an artificial turf fiber 501 incorporated into the carrier 308 such that a first portion 506 of the artificial turf fiber 501 protrudes to the back side of the carrier, a second portion 302 of the artificial turf fiber 506 protrudes to the front side of the carrier, and a third portion of the artificial turf fiber 504 is inside the carrier 308. A polyurethane backing 210 is formed on the back side of the carrier to cover the first portion of the artificial turf fiber,

Figure 5a illustrates the tufting of an artificial turf fiber and how a plurality of artificial turf fibers can be arranged in a carrier 308, e.g., a textile plane, by tufting. The carrier 308 may be a textile made of a hydrophobic polymer, e.g., PE. Tufting is a type of textile weaving in which an artificial tuft fiber 501 (that may be a monofilament 412 or a bundle of multiple monofilaments) is inserted on a carrier 308.

A "monofilament" as used herein is a filament generated by extruding a liquid polymer mixture through a single opening or is a slice of a polymer tape generated in accordance with the slit film technique.

After the inserting is done, as depicted in figure 5a, short U-shaped loops of the fiber point outside of the carrier's surface. Then, one or more blades cut 502 through the loops. As a result of the cutting step, two artificial turf fiber ends per loop and monofilament point out from the carrier and a grass-like artificial turf surface is generated as depicted in figure 5b. Thereby, first portions 506 of the monofilaments (corresponding to first portions of the artificial turf fibers) which have been inserted in the carrier 308 are exposed to a bottom side (back side) of the carrier and second portions 302 of said monofilaments are exposed to a top side of the carrier. Some portions 504 of the monofilaments / fibers are located within the carrier. Fibers or fiber bundles may protrude in loops 503 outside of the back side of the carrier. The piece of artificial turf generated in the tufting process may be forwarded to the backing assembly depicted in Figure 3 for applying the polyurethane reaction mixture 210 on the back side of the carrier.

Figures 6a and 6b show portions of monofilaments and fibers which are embedded in the polyurethane backing. Reference number 600 refers to the total height of a piece of artificial turf having been coated with the polyurethane reaction mixture 210 generated according to embodiments of the invention. The hydrophobized polyurethane reaction mixture may optionally contain pale oil and a surfactant in liquid or fluid state has flown around and wetted the fibers, including the monofilaments located in the inside of a fiber consisting of a plurality of monofilaments. The polyurethane reaction mixture 210' depicted in figures 6a and 6b has already solidified (and is referred to as solidified polyurethane reaction mixture or polyurethane backing) and strongly fixes the hydrophobic polymer monofilaments in the polyurethane backing.

Figures 6a and 6b correspond to different embodiments of the invention.

Figure 6a illustrates a piece of artificial turf made from a highly viscous polyurethane reaction mixture and/or with a close meshed carrier 308 that prevents the polyurethane reaction mixture from penetrating and transgressing the carrier. In this embodiment, second portions 302 of the fibers 501 protrude from the carrier 308 to the front side of the artificial turf and are not embedded in a polyurethane film as the liquid polyurethane reaction mixture 210 was not able to reach the front side of the carrier during the backing process. Also, the fiber portions 504 within the carrier are not wetted by the polyurethane reaction mixture in this embodiment. However, the back side portions 506 of the fibers are embedded in the liquid polyurethane reaction mixture 210 during the backing process. Although the length of these back side portions is comparatively small, the high hydrophobicity and the improved wetting of the fibers by the polyurethane reaction mixture 210 ensure that the fibers are firmly fixed by Van-der-Waals forces in the backing and that a slip stick effect further protects the fibers against tuft withdrawal forces. Figure 6b illustrates a piece of artificial turf made from a less viscous polyurethane reaction mixture (compared to the embodiment of figure 6a) and/or with a wide-meshed carrier 308. The carrier may be a textile mesh or another type of material that comprises perforations that allow the polyurethane reaction mixture 210 to enter the carrier and reach the front side of the artificial turf. Thus, the front portion 302 of the fibers in figure 6b comprises an outer portion 604 which is not embedded in the polyurethane film 210 and an inner portion 602 which is embedded in the polyurethane film 210.2 which has entered the carrier. In addition, portions 504 and 506 are wetted by and are embedded in the liquid polyurethane reaction mixture 210. Thus, the carrier, portions of the fibers inserted in the carrier and further portions 602 of the fibers at the front side of the carrier may become embedded in the polyurethane backing in addition to the portions 506 on the back side of the carrier. This embodiment of FIG 6B is advantageous in that the antimicrobial polyurethane backing is applied both on the back side and the front side of the carrier thus providing antimicrobial protection for the whole structure of the artificial turf except for the outer portion 604 of the fibers.

The liquid polyurethane reaction mixture 210 added in the backing process on the back side of the carrier surrounds and thereby mechanically fixes at least some portions of the monofilaments of the arranged artificial turf fibers. Then, the liquid polyurethane mixture 210 solidifies into a polyurethane artificial turf backing 210' at room temperature or in an oven. The solid film acts as the artificial turf backing. In some examples, additional backing layers may be added on the bottom of the artificial turf backing.

Although the invention has been described with specific embodiments it should be understood that many other variations of the invention may be envisaged by the skilled person after having read the present disclosure which do not depart from the scope of the invention as defined in the following claims.

By way of example, embodiments of the invention comprise the following features:
1. An artificial turf comprising:
   a carrier (308);
   an artificial turf fiber (501) incorporated into the carrier such that a first portion of the artificial turf fiber (506) protrudes to a back side of the carrier, a second portion of the artificial turf fiber (302) protrudes to a front side of the carrier, and a third portion of the artificial turf fiber (504) is inside the carrier; and
   a polyurethane backing (210') formed on the back side of the carrier,
   characterized in that the polyurethane backing (210') includes a biocide agent.
2. The artificial turf of claim 1,
   wherein the biocide agent is a zinc-based antimicrobial agent or a metal coordination complex with pyrithione.
3. The artificial turf of claim 1, wherein the biocide agent is pyrithione zinc added in an amount of from 0.05 wt% to 1.5 wt% of the polyurethane backing 210', preferably in an amount of from 0.08 wt% to 0.7 wt% of the polyurethane backing 210'.
4. The artificial turf of any of claims 1 to 3, wherein the polyurethane backing 210' further comprises a chelating agent in an amount from 0.01 wt% to 10.0 wt% of the polyurethane backing 210' to prevent the pyrithione zinc from slowing down the polymerization reaction of the polyurethane reaction mixture 210, and
   wherein a ratio of the mass of the biocide agent over the chelating agent is from 0.05 to 2.0.
5. The artificial turf of any of the claims 1 to 4, wherein the chelating agent is selected from the group consisting of:
   - polymeric carboxylic acids,
   - phosphonates, e.g. 2-Phosphonobutane-1,2,4,-tricarboxylic Acid (PBTC) or amino phosphonates,
   - alcohol amines, in particular aliphatic amine-initiated polyether polyols; and
   - salts thereof.
6. The artificial turf of any of the claims 1 to 5, wherein the chelating agent is selected from the group consisting of (1,2-diaminoethane)-initiated polyol, (2-aminoethyl ethanolamine)-initiated polyol, or (N,N-Bis(3-aminopropyl)methylamine)-initiated polyol, wherein preferably these polyols are propoxylated or ethoxylated or more preferably the polyols are both propoxylated and ethoxylated.
7. The artificial turf of any of the claims 1 to 6, wherein the turf fiber (501) comprises hydrophobic polyethylene fibers selected from the group consisting of polyethylene homopolymer fibers, polyethylene alloy fibers, polyethylene copolymer fibers, and polyethylene impact copolymer fibers.
8. The artificial turf of any of claims 1-7,
   - wherein the polyurethane backing is obtained by the hardening of a polyurethane reaction mixture (210) which comprises the reaction product of first and second polyols with an isocyanate,
   - wherein the first polyol is polyether polyol and/or polyester polyol having at least 2 hydroxyl groups per molecule,
   - wherein the second polyol is polybutadiene diol,
   - wherein the isocyanate comprises isocyanate monomers, isocyanate polymers or isocyanate prepolymers or a mixture thereof, and
   - wherein the isocyanate monomers, the isocyanate polymers and the isocyanate prepolymers have two or more isocyanate groups per molecule.
9. A method for manufacturing an artificial turf (600), the process comprising:
   - preparing a viscous polyurethane reaction mixture (102),
   - incorporating artificial turf fiber into a carrier (104); and
   - adding the viscous polyurethane reaction mixture on a back side of the carrier (106) to form a polyurethane backing (210'), and
   - hardening the viscous polyurethane reaction mixture (108) to form polyurethane backing on the back side of the carrier,
      wherein the method is characterized in that the polyurethane reaction mixture (210) includes a biocide agent.
10. The method of claim 9, wherein the polyurethane reaction mixture (210) further comprises a chelating agent for maintaining the polymerization reaction of the polyurethane reaction mixture added in an amount of from 0.1 wt% to 10 wt% of the polyurethane reaction mixture, and wherein a ratio of the mass of the biocide agent over the chelating agent is from 0.05 to 2.
11. The method of claims 9 or 10, wherein the incorporating of the fiber into the carrier (104) positions the fiber (501) so that a first portion (506) of the fiber (501) is located at the back side of the carrier (308), a second portion (302) of the fiber (501) is protruding to the front side of the carrier (308), and a third portion of the fiber is in the middle of the carrier (308).
12. The method of any of the claims 10 to 11,
   wherein the preparing of the fluid polyurethane mixture (102) comprises mixing first and second polyols, an isocyanate, the biocide agent, and the chelating agent,
   wherein the first polyol being a polyether polyol and/or a polyester polyol having at least 2 hydroxyl groups per molecule, the second polyol being polybutadiene diol;
   wherein the isocyanate comprising isocyanate monomers, isocyanate polymers or isocyanate prepolymers or a mixture thereof, the isocyanate monomers, isocyanate polymers and the isocyanate prepolymers having two or more isocyanate groups per molecule.
13. The method of any of the claims 9-12, wherein the biocide agent is a zinc-based antimicrobial agent or a metal coordination complex with pyrithione, and preferably is zinc pyrithione added in an amount of 0.05 wt% to 1.5 wt% of the polyurethane reaction mixture 210, preferably in an amount of 0.08 wt% to 0.7 wt% of the polyurethane reaction mixture 210.
14. The method of any of claims 10 to 13, wherein the chelating agent is selected from the group consisting of (1,2-diaminoethane)-initiated polyol, (2-aminoethyl ethanolamine)-initiated polyol, or (N,N-Bis(3-aminopropyl)methylamine)-initiated polyol, wherein preferably these polyols are preferably propoxylated or ethoxylated or more preferably the polyols are both propoxylated and ethoxylated.
15. The method of any of the claims 9 to 14,
   wherein the turf fiber (501) comprises hydrophobic polyethylene fibers selected from the group consisting of polyethylene homopolymer fibers, polyethylene alloy fibers, polyethylene copolymer fibers, and polyethylene impact copolymer fibers,
   wherein polybutadiene diol is added in an amount of 0.5-10% by weight of a combination of the first polyol and the isocyanate, more preferably an amount of 1.0 - 9.0 % by weight of said combination and most preferably an amount of 4.0-8.0 % by weight of said combination, and
      wherein the polybutadiene diol has a number average molecular weight in the range of 1000 to 6000 g/mol, more preferably in the range of 1.500 to 4.500 g/mol.
16. The artificial turf obtained by the method of any one of the claims 9 -15.

### List of Reference Numerals

- 102-102'-104-106-108: method steps
- 201: first tank for first mixture
- 202: first mixture
- 203: second tank for second mixture
- 204: second mixture
- 205: third tank or container for third mixture
- 206: third mixture
- 208: blender
- 210: polyurethane reaction mixture
- 210': polyurethane backing
- 212: hose of backing assembly
- 214: opening of hose
- 302: fibers protruding from carrier
- 304: knife
- 306: roll
- 308: carrier, e.g. textile mesh
- 400: polymer mixture for fiber creation
- 402: hydrophobic fiber polymer
- 404: additive
- 406: additive
- 408: plate
- 410: opening of extrusion nozzle
- 412: extruded monofilament
- 501: artificial turf fiber
- 502: cutting step
- 503: fiber loop
- 504: fiber portion within carrier
- 506: fiber portion protruding to the back side of the carrier
- 600: artificial turf
- 602: fiber portion protruding to the front side of the carrier being embedded in the polyurethane reaction mixture
- 604: fiber portion protruding to the front side of the carrier not being embedded in the polyurethane reaction mixture
- PU: Polyurethane
- PZ: Pyrithione Zinc

## Claims

1. An artificial turf comprising:
a carrier (308);
an artificial turf fiber (501) incorporated into the carrierand a polyurethane backing (210') formed on the back side of the carrier,
**characterized in that** the polyurethane backing (210') includes a biocide agent.

2. The artificial turf of claim 1, wherein the biocide agent is added in an amount of from 0.05 wt% to 1.5 wt% of the polyurethane backing 210', preferably in an amount of from 0.08 wt% to 0.7 wt% of the polyurethane backing 210'.

3. The artificial turf of claims 1 or 2, wherein the polyurethane backing 210' further comprises a chelating agent,
wherein a ratio of the mass of the biocide agent over the chelating agent is from 0.05 to 2.0.

4. The artificial turf of claim 3,
wherein the chelating agent is selected from the group consisting of:
- polymeric carboxylic acids,
- phosphonates including 2-phosphonobutane-1,2,4,-tricarboxylicAcid (PBTC) or amino phosphonates,
- alcohol amines including aliphatic amine-initiated polyether polyols; and
- salts thereof, or
- preferably wherein the chelating agent is selected from the group consisting of (1,2-diaminoethane)-initiated polyol, (2-aminoethyl ethanolamine)-initiated polyol, or (N,N-Bis(3-aminopropyl)methylamine)-initiated polyol, wherein preferably these polyols are propoxylated or ethoxylated or more preferably the polyols are both propoxylated and ethoxylated.

5. The artificial turf of any of the preceding claims, wherein the biocide agent is a zinc-based antimicrobial agent or a metal coordination complex with pyrithione.

6. The artificial turf of any of the claims 1 to 5, wherein the turf fiber (501) comprises hydrophobic polyethylene fibers selected from the group consisting of polyethylene homopolymer fibers, polyethylene alloy fibers, polyethylene copolymer fibers, and polyethylene impact copolymer fibers.

7. The artificial turf of any of claims 1 to 6,
- wherein the polyurethane backing is obtained by the hardening of a polyurethane reaction mixture (210) which comprises the reaction product of first and second polyols with an isocyanate,
- wherein the first polyol is polyether polyol and/or polyester polyol having at least 2 hydroxyl groups per molecule,
- wherein the second polyol is polybutadiene diol,
- wherein the isocyanate comprises isocyanate monomers, isocyanate polymers or isocyanate prepolymers or a mixture thereof, and
- wherein the isocyanate monomers, the isocyanate polymers and the isocyanate prepolymers have two or more isocyanate groups per molecule.

8. A method for manufacturing an artificial turf (600), the process comprising:
- preparing a viscous polyurethane reaction mixture (102),
- incorporating artificial turf fiber into a carrier (104); and
- adding the viscous polyurethane reaction mixture on a back side of the carrier (106) to form a polyurethane backing (210'), and
- hardening the viscous polyurethane reaction mixture (108) to form polyurethane backing on the back side of the carrier,
wherein the method is **characterized in that** the polyurethane reaction mixture (210) includes a biocide agent.

9. The method of claim 8, wherein the polyurethane reaction mixture (210) further comprises a chelating agent added in an amount of from 0.1 wt% to 10 wt% of the polyurethane reaction mixture.

10. The method of claims 8 or 9, wherein the incorporating of the fiber into the carrier (104) positions the fiber (501) so that a first portion (506) of the fiber (501) is located at the back side of the carrier (308), a second portion (302) of the fiber (501) is protruding to the front side of the carrier (308), and a third portion of the fiber is in the middle of the carrier (308,
wherein the hardening of the viscous polyurethane reaction mixture (108) is controlled to allow the viscous polyurethane reaction mixture (108) to penetrate the carrier so that the antimicrobial polyurethane backing is formed both on the back side and a front side of the carrier.), wherein the preparing of the fluid polyurethane mixture (102) comprises mixing first and second polyols, an isocyanate, the biocide agent, and the chelating agent,
wherein the first polyol being a polyether polyol and/or a polyester polyol having at least 2 hydroxyl groups per molecule, the second polyol being polybutadiene diol; and
wherein the isocyanate comprising isocyanate monomers, isocyanate polymers or isocyanate prepolymers or a mixture thereof, the isocyanate monomers, isocyanate polymers and the isocyanate prepolymers having two or more isocyanate groups per molecule.

11. The method of claims 8 to 10,
wherein the biocide agent is a zinc-based antimicrobial agent or a metal coordination complex with pyrithione, and preferably is zinc pyrithione added in an amount of 0.05 wt% to 1.5 wt% of the polyurethane reaction mixture 210, preferably in an amount of 0.08 wt% to 0.7 wt% of the polyurethane reaction mixture 210.

12. The method of any of claims 8 to 11,
wherein the chelating agent is selected from the group consisting of (1,2-diaminoethane)-initiated polyol, (2-aminoethyl ethanolamine)-initiated polyol, or (N,N-Bis(3-aminopropyl)methylamine)-initiated polyol, wherein preferably these polyols are preferably propoxylated or ethoxylated or more preferably the polyols are both propoxylated and ethoxylated, and
wherein a ratio of the mass of the biocide agent over the chelating agent is from 0.05 to 2.

13. The method of any of the claims 9 to 12,
wherein the turf fiber (501) comprises hydrophobic polyethylene fibers selected from the group consisting of polyethylene homopolymer fibers, polyethylene alloy fibers, polyethylene copolymer fibers, and polyethylene impact copolymer fibers,
wherein polybutadiene diol is added in an amount of 0.5-10% by weight of a combination of the first polyol and the isocyanate, more preferably an amount of 1.0 - 9.0 % by weight of said combination and most preferably an amount of 4.0-8.0 % by weight of said combination,
wherein the polybutadiene diol has a number average molecular weight in the range of 1000 to 6000 g/mol, more preferably in the range of 1.500 to 4.500 g/mol, and
wherein the biocide agent is pre-dispersed in the chelating agent.

14. The artificial turf obtained by the method of any one of the claims 8 to 13.
